Europäisches Patentamt

European Patent Office

Office européen des brevets

(11) Veröffentlichungsnummer: **0 292 653 B1**

(12) **EUROPÄISCHE PATENTSCHRIFT**

(45) Veröffentlichungstag der Patentschrift: 25.09.91

(51) Int. Cl.5: **G01D 5/26, G01L 1/24**

(21) Anmeldenummer: 88103455.7

(22) Anmeldetag: 05.03.88

(54) **Faseroptischer Stellwertgeber.**

(30) Priorität: 26.05.87 DE 3717687

(43) Veröffentlichungstag der Anmeldung:
30.11.88 Patentblatt 88/48

(45) Bekanntmachung des Hinweises auf die
Patenterteilung:
25.09.91 Patentblatt 91/39

(84) Benannte Vertragsstaaten:
DE ES FR GB IT SE

(56) Entgegenhaltungen:
EP-A- 0 066 964
EP-A- 0 213 872
US-A- 4 692 610

OPTICAL ENGINEERING Band 24, Nr. 6,
November-Dezember 1985, Seiten 961-965,
Bellingham, Washington, US; M. JOHNSON et
al.:"Fiber displacement sensors for metrology and control"

FEINWERKTECHNIK + MESSTECHNIK Band
95, Nr. 1, Seiten 39,40, Januar-Februar 1987,
München, L. FALCO et al.:"Reflektometrie
und faseroptische Sensoren"

(73) Patentinhaber: **Messerschmitt-Bölkow-Blohm
Gesellschaft mit beschränkter Haftung
Robert-Koch-Strasse
W-8012 Ottobrunn(DE)**

(72) Erfinder: **Sepp, Gunther, Dr.
Haydnstrasse 5
W-8012 Ottobrunn(DE)**

**Beschreibung**

Faseroptische Sensoren sind in vielfältiger Ausführung bekannt (Zeitschrift für Labortechnik, Okt. 1980, S. 1083-1093 oder "Laser und Optoelektronik", Nr. 1, 1984, S. 17-29 oder Feinwerktechnik + Meßtechnik, Bd 95, Nr. 1, S. 39, 40 oder EP-A-0213 872 ). Die aus den ersten beiden Schriften bekannten Ausführungen sind, soweit sie zu Weg- oder Winkelmessungen geeignet sind, vornehmlich zur hochgenauen Auflösung kleiner Weg- oder Winkelgrößen geeignet. Die aus den letzten beiden Schriften bekannten Ausführungen sind zwar für größere räumliche Strecken gedacht, jedoch ist hierbei entweder die räumliche Auflösung mit einigen Zentimetern entsprechend ungenau oder die Anordnung nicht als Stellwertgeber geeignet.

Weiterhin sind Stellwertgeber bekannt, mit denen die Erfassung größerer Wege oder Winkel möglich ist und bei denen die Bewegung eines Weg- oder Winkelaufnehmers in ein elektrisches Signal, zum Beispiel nach dem Potentiometerprinzip, umgesetzt wird.

Schließlich sind noch optische Methoden zur Erfassung größerer Entfernungen bzw. Entfernungsänderungen bekannt, bei denen ein Lichtimpuls ausgesendet, von dem zu vermessenden Gegenstand reflektiert und der reflektierte Impuls wieder empfangen wird. Die Laufzeit des ausgesendeten und reflektierten Impulses ist ein Maß für die Entfernung zum reflektierenden Objekt.

Es ist Aufgabe der Erfindung, einen Stellwertgeber zu schaffen, der genau und in einem großen Bereich die Position von mechanischen Bauteilen, wie z.B. Klappen an Flugzeugen, erfaßt, der im LSensorverbund arbeiten, d.h. "multiplexed" werden kann, und der von elektromagnetischen Feldern und Verschmutzung unbeeinflußt bleibt. Diese Aufgabe wird durch einen gemäß Patentanspruch 1 ausgebildeten faseroptischen Stellwertgeber gelöst.

Der faseroptische Stellwertgeber macht sich die Eigenschaft von Lichtleitfasern zunutze, daß bei starker Biegung oder punktförmiger Druckbelastung der Faser ein sogen. microbending-Effekt auftritt, der bewirkt, daß im Bereich der Krümmung ein Teil des geführten Lichtes abgestrahlt bzw. reflektiert wird. Bei periodisch punktförmiger Druckbelastung tritt bei einer bestimmten, von Lichtleiterbauart und Lichtwellenlänge abhängigen Periodenlänge ein besonders ausgeprägter "resonanter" microbending-Effekt auf. Bei dem erfindungsgemäßen Stellwertgeber wird der reflektierte Anteil des Lichtes dazu verwendet, mittels einer optoelektrischen Entfernungsmeßmethode, z.B. mittels eines Impulslaserentfernungsmessers, die Position der Druckstelle zu ermitteln. Wenn nun, wie vorgesehen, die Lichtleitfaser zu einer Spule aufgewickelt ist, und ein auf einem Wegaufnehmer befestigter Druckfinger längs der Spulenachse auf in kurzes Stücke einer Windung drückt, so genügt es, aufgrund der stets gleichen Lichtleitfaserabschnitte von einer Windung zur nächsten die Position der Druckstelle nur mit einer Genauigkeit zu messen, die der Länge der Lichtleitfaser von einer möglichen Druckstelle zur nächsten entspricht, d.h. es genügt lediglich die Bestimmung der jeweiligen Windung, in der sich die Druckstelle und somit die Position des Druckfingers befindet. Da die Lichtleitfasern im Querschnitt sehr dünn und somit bei einer Spule sehr eng nebeneinander liegen, ist die Auflösung des Stellwertgebers dennoch sehr hoch, ohne daß ein Entfernungsmesser höchster Genauigkeit benötigt wird. Der bei gegebener Meßgenauigkeit notwendige Durchmesser einer solchen Lichtleitfaserspule kann reduziert werden, wenn die Spule n-lagig ausgeführt wird und der Druckfinger auf eine der jeweils n-ten über ein entsprechendes Gegenlager geführten Windungen der Lichtleitfaser drückt.

Bei dem erfindungsgemäßen faseroptischen Stellwertgeber ist es möglich mehrere Stellwertgeber mit nur einer optolektrischen Sende- und Empfangseinrichtung zu betreiben, wenn die einzelnen Stellwertgeber je einen mehreren eng benachbarten Druckfingern entsprechenden Adressenkodierer aufweisen, der mehreren benachbarten Windungen am Spulende ein individuelles microbending-Muster aufprägt. Die einzelnen Stellwertgeber können somit durch Auswertung der dadurch erzeugten optischen Signale, d.h. ihrer Adressen erkannt werden.

Die Erfindung wird im folgenden anhand der in den Figuren teilweise schematisch dargestellten Ausführungsbeispiele näher beschrieben. Es zeigen:

| | |
|---|---|
| Fig. 1 | den schematischen Aufbau eines faseroptischen Stellwertgebers mit dem zugehörigen Auswertegerät; |
| Fig. 2 a - d | in drei Längsschnitten und einem Querschnitt verschiedener Ausführungsformen den Aufbau eines faseroptischen Stellwertgebers; |
| Fig. 3 a - b | einen Längs- und Querschnitt III b durch eine mehrlagige Lichtleitfaserspule; |
| Fig. 4 | ein Ende der Lichtleitfaserspule eines Stellwertgebers mit binärem Adressenkodierer; |
| Fig. 5 a - b | eine Serien- und eine Parallelanordnung mehrerer faseroptischer Stellwertgeber mit einem Auswertegerät; |
| Fig. 6 | die Echoimpulsfolge bei einer Anordnung gem Fig. 5; |

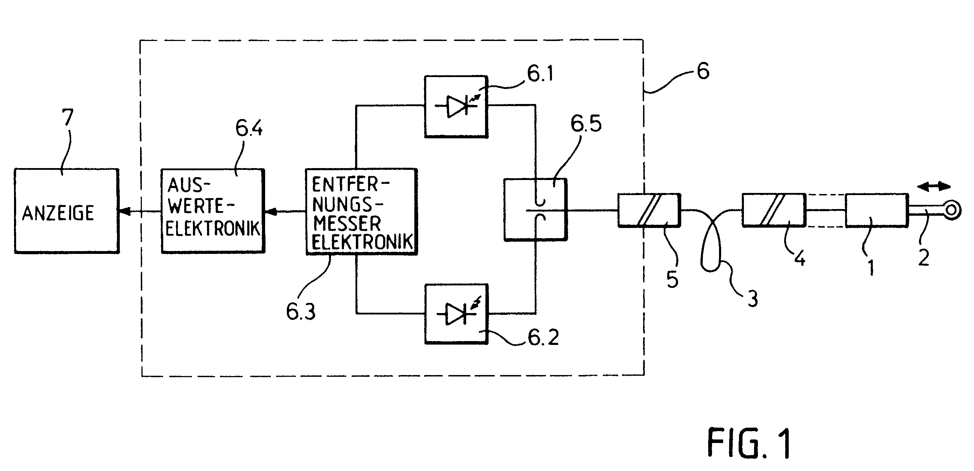

Bei der in Figur 1 dargestellten Anordnung ist ein faseroptischer Sensor 1, der einen mechanischen Wegaufnehmer 2 besitzt, über eine Lichtleiterverbindung 3 mit entsprechenden Steckern 4 und 5 mit einem Auswertegerät 6 verbunden. Der Stecker 4 kann auch direkt am Stellwertgeber 1 angeordnet sein. Das Auswertegerät beinhaltet im wesentlichen einen optoelektrischen Sender 6.1, z.B. eine Laserdiode, sowie einen optoelektrischen Empfänger 6.2, z.B. eine Photodiode, welche mit einer Entfernungsmeß- und Auswertelektronik 6.3 und 6.4 elektrische verbunden sind. Die optische Ankoppelung des Senders 6.1 und Empfängers 6.2 an die Lichtleitverbindung 3 und damit an den Sensor 1 geschieht über einen Koppler 6.5. Die Entfernungsmeßelektronik 6.3 stellt das durch microbending erzeugte "Echo" des in die Lichtleitfaser gesendeten Laserlichts und damit die Entfernung des Druckfingers z.Z. des Stellwertgebers 1 fest. Die Auswertelektronik 6.4 ordnet dieses Echo der interessierenden Meßgröße, d.h. dem Stellwert dieser bestimmten Stellwertgebers 1 zu. Der von dem Auswertegerät 6 ermittelte Positionszustand des Wegaufnehmers 2 wird in einer Anzeige 7 dargestellt.

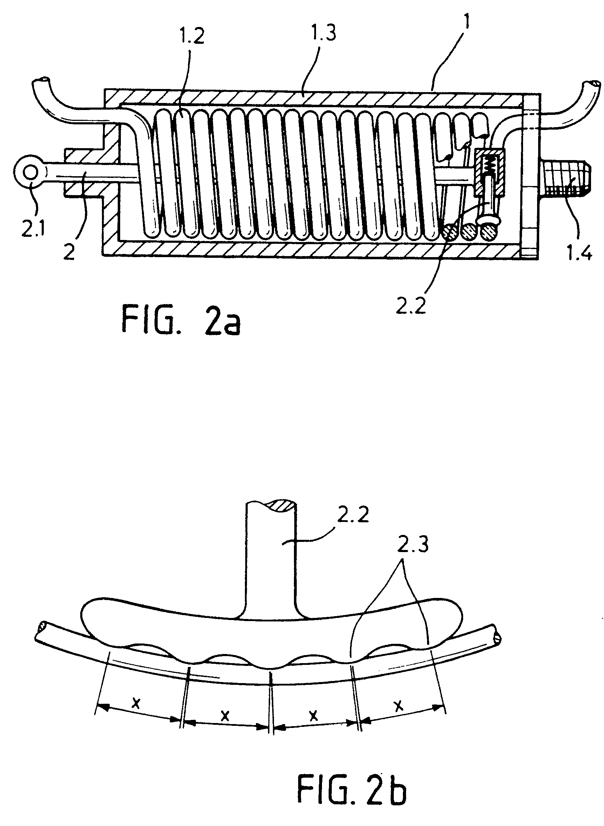

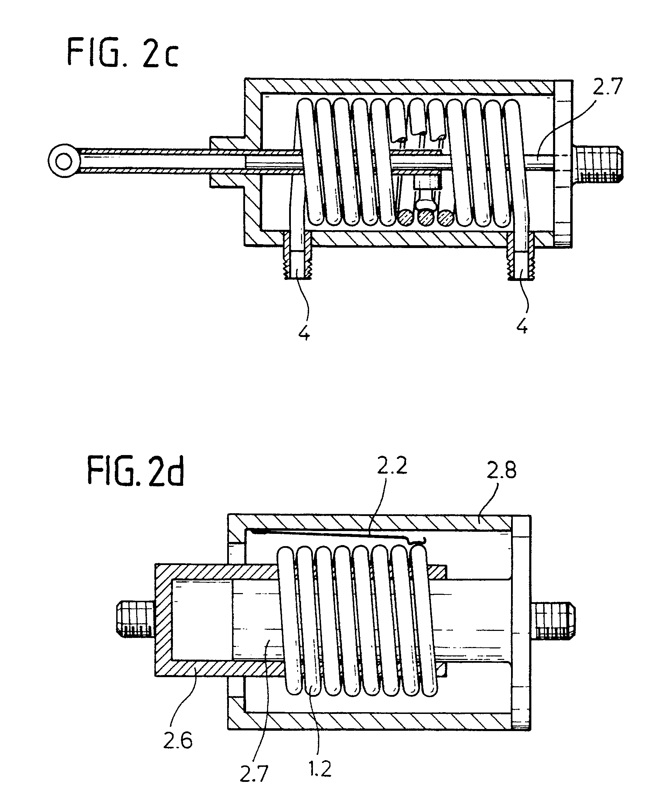

Der in Fig. 2 a dargestellte faseroptische Stellwertgeber 1 weist eine Lichtleitfaserspule 1.2 auf, deren einlagige Wicklung aus gleich großen, eng benachbarten Windungen eines Lichtleiters mit einem Faserdurchmesser von ca. 125 μm besteht. Die Lichtleitfaserspule 1.2 ist von einem Gehäuse 1.3 umgeben, welches eine Befestigung 1.4 aufweist. Koaxial zur Lichtleitfaserspule 1.2 wird im Innern des Gehäuses 1.3 eine Stange 2 geführt, welche als Wegaufnehmer dient und am äußeren Ende eine entsprechende Befestigungsstelle 2.1 aufweist. Die Stange 2 trägt am inneren Ende einen federnd gelagerten Druckfinger 2.2. der in radialer Richtung auf ein relativ kurzes Stück jeweils einer Windung der Lichtleitfaserspule 1.2 drückt. Bei axialer Verschiebung der Stange 2 wird somit der Druckfinger 2.2 von Windung zu Windung geführt und verursacht dadurch in stets gleichen Längenabschnitten der Lichtleitfaser den microbending-Effekt und damit ein vom Stellwert abhängiges Echo. Zur Verstärkung dieses Echos ohne größeren Anpressdruck des Druckfingers 2.2 wird dieser gemäß Fig. 2 b mit mehr als nur einem Druckpunkt 2.3 versehen. Die Abstände x dieser Druckpunkte längs der Lichtleitfaser sind gleich und in bekannter Weise derart auf Wellenlänge und Lichtleiteraufbau abgestimmt, daß der sog. resonante microbending-Effekt auftritt. Ein typischer Abstand ist etwa x = 2 mm. Der Anpressdruck wird besonders gleichmäßig, wenn gemäß Fig. 2 c die Stange 2 hohl ist und durch eine innere, am anderen Ende des Gehäuses 1.3 befestigte Stange 2.7 zusätzlich geführt wird.

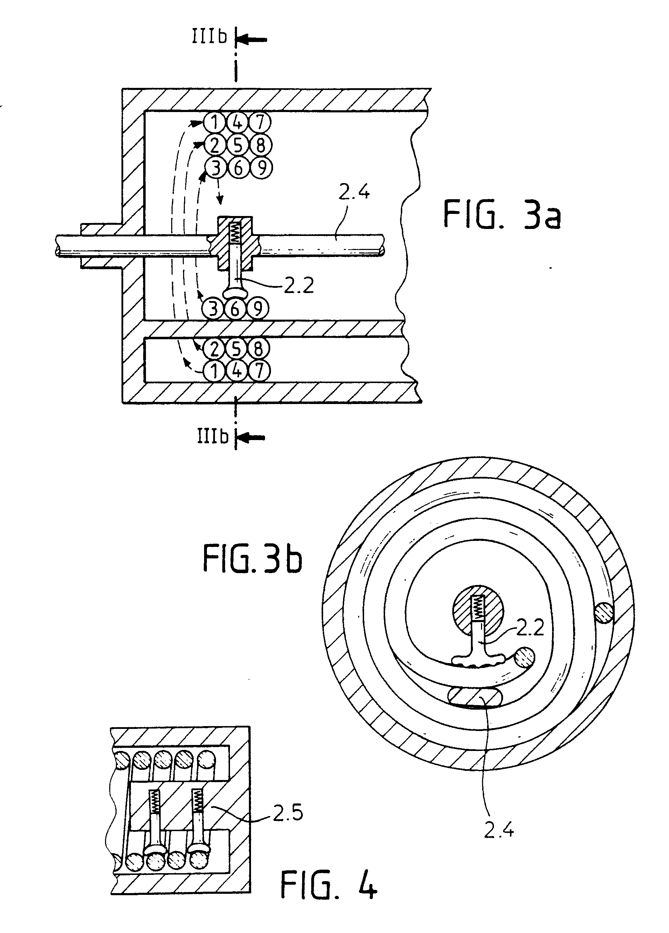

Um die Längenabschnitte zwischen zwei Druckstellen, die der Druckfinger 2.2 beim Sprung von einer Windung zur nächsten durchführt, zu erhöhen, kann die Lichtleitfaserspule auch mehrlagig nach dem in den Fig. 3 a und 3 b dargestellten Prinzip gewickelt sein. Wie aus den durchnummerierten Windungen zu erkennen ist, werden in diesem Fall z.B. stets drei Windungen in radialer Richtung, also spiralförmig, aufeinander gewickelt, bis der axiale Versatz zur nächsten Windung, also schraubenförmig, erfolgt. Die innerste Lage wird über eine als Gegenlager für den Druckfinger 2.2 wirkende Platte 2.4 geführt. Dadurch wird die optische Weglänge zwischen zwei benachbarten, innen liegenden Windungen etwa verdreifacht gegenüber dem in Fig. 2 a dargestellten Beispiel. Die Rolle von Druckpunkten 2.3 und Gehäuse 1.3 bzw. Gegenlager 2.4 kann auch umgekehrt werden, d.h. der Druckfinger 2.2 kann glatt und Gehäuse 1.3 bzw. Gegenlager 2.4 mit als Druckpunkte 2.3 wirkenden konvexen linienhaften Erhebungen in Spulenlängsrichtung ausgeführt werden.

Ebenso kann die Rolle von Druckfinger 2.2 und Gehäuse 1.3 bzw. Gegenlager 2.4 umgekehrt werden. Fig. 2 d zeigt einen Stellwertgeber 1, bei dem die Lichtleitfaserspule 1.2 auf einen Spulenkern 2.6 aufgewickelt ist, welcher wieder durch eine Stange bzw. Zylinder 2.7 geführt ist. Der Druckfinger wird jetzt durch eine am Außengehäuse 2.8 befestigte Feder 2.2 gebildet. Hierdurch wird die Herstellung des Stellwertgebers 1 auf Kosten der Kompaktheit erleichtert.

Um in einer anderen, nicht dargestellten Ausführungsform anstelle einer linearen Bewegung eine Drehbewegung zu messen, wird die Lichtleitfaserspule 1.2 torusförmig ausgebildet und der Druckfinger 2.2 analog zu der geraden Ausführungsform gemäß Fig. 2 d außen in einer dazu konzentrischen Kreisbahn bewegt.

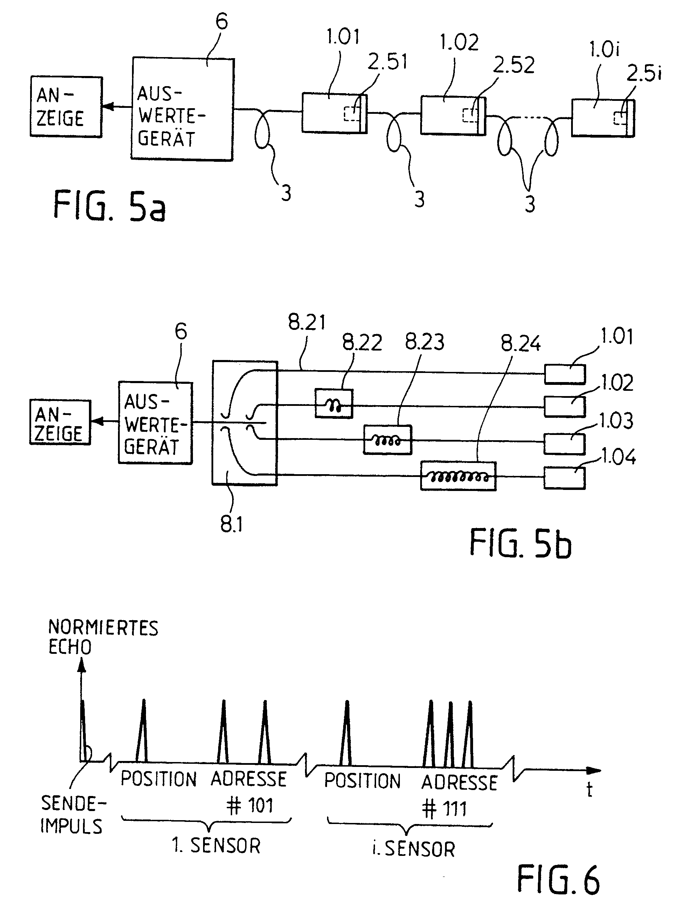

Durch das microbending des Druckfingers 2.2 wird ein Teil des in dem Lichtleiter hineingesendeten Laserlichts in ein Echo und Streustrahlung umgewandelt. Erfindungsgemäß können daher mehrere Stellwertgeber (1.01, 1.02, ... 1.0i) in Serie (Fig. 5 a) hintereinander geschaltet werden, wenn beide Enden der Lichtleitfaser aus dem Sensor herausgeführt werden, wobei die Entfernungsmeßelektronik 6.3 die vom durchgelassenen Laserlicht an der jeweils nächsten Druckstelle erzeugten Echos bestimmt. Bei bekannten Lichtleiterlängen der einzelnen Stellwertgeber 1 sowie der diese verbindenden Lichtleiter 3 oder durch eine Kalibrationsmessung kann die Auswertelektronik 6.4 somit die einzelnen Echos den Druckfingern 2.2 der einzelnen Stellwertgebern zuordnen und ihre Stellwerte gemeinsam der Anzeige 7 zuführen.

Dieses in der Praxis überaus wichtige Multiplex-Verfahren wird erfindungsgemäß noch dadurch vereinfacht, daß die einzelnen Stellwertgeber sozusagen mit einer individuellen Adresse versehen werden, so daß das Auswertegerät ohne Kalibration oder Ausmessen von Lichtleiterlängen jeden einzelnen Stellwertgeber erkennt. Hierzu wird an einem Ende jeder Lichtleitfaserspule 1.2 gemäß Fig. 4 eine als Adressenkodierer wirkende Einrichtung 2.5 aus mehreren Druckfingern der beschriebenen Art angeordnet. Diese werden - analog etwa den Zuhaltungen eines Schlüssels-einmalig auf einige wenige Windungen der Lichtleitfaserspule fest eingestellt. Die Entfernungsmeßelektronik 6.3 stellt die hierdurch erzeugten Echos fest und die Auswertelektronik 6.4 interpretiert diese als eine - den kleinstmöglichen Einheiten, d.h. einer bzw. n Windungen entsprechenden - binäre Folge von "0" und "1" (Fig. 6) und damit als die "Adresse" des somit identifizierten Stellwertgebers 1. Die "Entfernung" dieser Adresse bildet gleichzeitig eine Referenz für den zur Messung verschieblichen Druckfinger 2.2 ("Nullpunkt" der Meßskala). Bei festverschalteten Sensorverbund kann die immer gleiche Entfernung der jeweiligen Adressenkodierer 2.5 zur Überprüfung der Entfernungsmessung und damit der Stellwertmessungen verwendet werden.

Die einzelnen Stellwertgeber 1.01 bis 1.04 können auch in Parallelschaltung mittels eines Sternkopplers 8.1 (Fig. 5 b) eingesetzt werden. Um die Echos der einzelnen Sensoren auseinanderzuhalten, wird jedem Stellwertgeber 1 eine genügend, jedoch verschieden lange Zuleitung 8.2i, z.B. in Form einer Verzögerungsspule 8.22 bis 2.24 zugeordnet, so daß sich weider ein "Echobild gemäß Fig. .6 ergibt.

Zur Entfernungsmessung wird vorzugsweise ein Pulslaserentfernungsmesser verwendet. Verzichtet man auf den Sensor-Multiplex, so kann jedoch auch ein CW-Laserentfernungsmesser mit seinen bekannten Vorzügen (geringer Aufwand, hohe Meßgenauigkeit) eingesetzt werden.

Damit ist ein vollständig aus isolierenden Materialien bestehender, präzise messender Sensorverbund geschaffen, bei welchem das zur Messung benötigte Licht vollständig in Lichtleitern eingeschlossen ist und somit ein Verschmutzung sowie elektromagnetische Störungen ausgeschlossen sind.

## Patentansprüche

1. Faseroptischer Stellwertgeber **enthaltend**
   eine Lichtleitfaserspule (1.2) mit mindestens einer enggewickelten Wicklungslage, innerhalb der zwischen benachbarten Windungen die Abschnitte der Lichtleitfaser gleichlang sind, einen Druckfinger (2.2), der mit einem mechanischen Wegaufnehmer (2) verbunden und über die Wicklungslage führbar ist und auf ein vergleichsweise kurzes Stück der Lichtleitfaser einer Windung einen mechanischen Druck ausübt zur Erzeugung eines sogen. microbending-Effektes sowie eine optoelektronische Sende- und Empfangseinrichtung (6), welche mit der Lichtleitfaser verbunden ist und den Ort, der durch den Druckfinger (2.2) verursachten Druckstelle und damit die Position des Druckfingers ermittelt.

2. Stellwertgeber nach Anspruch 1 **dadurch gekennzeichnet,** daß an einem Ende der Lichtleitfaserspule (1.2) eine Einrichtung (2.5) aus einem oder mehreren festeingestellten Druckfingern angeordnet ist, welche auf eine oder mehrere Windungen der Lichtleitfaser drücken und ihr damit ein definiertes microbending-Muster aufprägen.

3. Stellwertgeber nach den Ansprüchen 1 oder 2 **dadurch gekennzeichnet,** daß die Lichtleitfaserspule n-lagig ausgeführt ist und der Druckfinger (2.2) auf eine der jeweils n-ten über ein Gegenlager (2.4) geführten Windungen drückt.

4. Stellwertgeber nach einem oder mehren der Ansprüche 1 bis 3 **dadurch gekennzeichnet,** daß der Druckfinger (2.2) auf ein Teilstück einer Windung der Lichtleitfaser an mehreren eng benachbarten Druckpunkten (2.3) drückt, deren Abstand auf das sog. resonante microbending abgestimmt ist.

5. Stellwertgeber nach einem oder mehreren der Ansprüche 1 bis 4 **dadurch gekennzeichnet,** daß die Lichtleitfaserspule zylindrisch ausgebildet und der Druckfinger koaxial zur Zylinderachse bewegbar ist.

6. Stellwertgeber nach einem oder mehreren der Ansprüche 1 bis 4 **dadurch gekennzeichnet,** daß die Lichleitfaserspule torusförmig ausgebildet und der Druckfinger in einer konzentrischen Kreisbahn bewegbar ist.

7. Stellwertgeber nach einem oder mehreren der Ansprüche 1 bis 6 **dadurch gekennzeichnet,** daß die optoelektrische Sende- und Empfangseinrichtung (6) ein Laser-Entfernungsmesser ist, dessen Entfernungsmeßfehler kleiner als die Lichtleitfaserlänge zwischen zwei benachbarten möglichen Positionen des Druckfingers (2.2) ist.

8. Stellwertgeber nach einem oder mehreren der Ansprüche 1 bis 7 **dadurch gekennzeichnet,** daß die optoelektrische Sende- und Empfangseinrichtung ein Pulslaserentfernungsmesser ist.

9. Stellwertgeber nach einem oder mehreren der Ansprüche 1 bis 8 **dadurch gekennzeichnet,** daß die optoelektrische Sende- und Empfangseinrichtung ein nach dem Phasenmeßverfahren arbeitender CW-Entfernungsmesser ist und die Lichtleitfaserspule mit einem Lichtabsorber abgeschlossen ist.

10. Stellwertgeber nach einem oder mehreren der Ansprüche 1 bis 9 **dadurch gekennzeichnet,** daß die Lichtleitfaserspulen mehrerer Stellwertgeber nach Art einer Serienschaltung miteinander verbunden sind.

11. Stellwertgeber nach einem oder mehreren der Ansprüche 1 bis 10 **dadurch gekennzeichnet,** daß die Lichtleitfaserspulen mehrerer Stellwertgeber nach Art einer Parallelschaltung miteinander verbunden sind und jeder Lichtleitfaserspule eine optische Verzögerungsstrecke vorgeschaltet ist.

**Claims**

1. Fibre-optical probe-position indicator comprising a light-conducting fibre coil (1.2) with at least one tightly wound winding layer, sections of light-conducting fibres between adjacent windings being of equal length,
   a pressure finger (2.2) which is connected to a mechanical guide (2) and guided over the winding layer and which applies mechanical pressure to a relatively short section of the light-conducting fibre of a winding to generate a so-called micro-bending effect, and
   an opto-electronic transmitting- and receiving device (6) which is connected to the light-conducting fibre and determines the location of the pressure point created by the pressure finger (2.2), and thus the position of the pressure finger.

2. Probe-position indicator according to claim 1, characterised in that at one end of the light-conducting fibre coil (1.2) is arranged a device (2.5) comprising one or more fixedly mounted pressure fingers, which press on one or more windings of the light-conducting fibre, thereby pressing out a defined micro-bending shape.

3. Probe-position indicator according to claims 1 or 2, characterised in that the light-conducting fibre coil is n-type in construction and the pressure finger (2.2) presses on the respective n-guided windings via an abutment means (2.4).

4. Probe-position indicator according to one or more of claims 1 to 3, characterised in that the pressure finger (2.2) presses on a section of a winding of the light-conducting fibre at several closely adjacent pressure points (2.3), the distance between which corresponds with the so-called resonant micro-bending.

5. Probe-position indicator according to one or more of claims 1 to 4, characterised in that the light-conducting fibre coil is cylindrical and the pressure finger is movable coaxially relative to the cylinder axis.

6. Probe-position indicator according to one or more of claims 1 to 4, characterised in that the light-conducting fibre coil is in the form of a torus and the pressure finger is movable in a concentric circular path.

7. Probe-position indicator according to one or more of claims 1 to 6, characterised in that the opto-electrical transmitting and receiving device (6) is a laser rangefinder having a measuring inaccuracy which is less than the length of light-conducting fibre between two possible adjacent positions of the pressure finger (2.2).

8. Probe-position indicator according to one or more of claims 1 to 7, characterised in that the opto-electrical transmitting and receiving device is a pulsed laser rangefinder.

9. Probe-position indicator according to one or more of claims 1 to 8, characterised in that the opto-electrical transmitting and receiving device is a CW-rangefinder operating according to the phase-measuring method, and the light-conducting fibre coil is sealed by a light absorber.

10. Probe-position indicator according to one or more of claims 1 to 9, characterised in that light-conducting fibre coils of a plurality of probe-position indicators are connected in series.

11. Probe-position indicator according to one or more of claims 1 to 10, characterised in that light-conducting fibre coils of a plurality of probe-position indicators are connected in parallel and each light-conducting fibre coil is connected in series to an optical delay path.

**Revendications**

1. Transmetteur de position à fibre optique comportant un enroulement de fibre optique (1.2) avec au moins un rang de spires serrées, les tronçons de fibre optique à l'intérieur des spires voisines étant de même longueur, un doigt presseur (2.2) qui est relié à un capteur de course (2) mécanique et peut être déplacé sur le rang de spires et qui exerce une pression mécanique sur une portion relativement courte de la fibre optique d'une spire afin de produire un effet dit de micro-courbure, ainsi qu'un dispositif d'émission et de réception (6) optoélectronique, qui est relié à la fibre optique et détermine l'endroit du point de pression engendré par le doigt presseur (2.2) et ainsi la position du doigt presseur.

2. Transmetteur de position selon la revendication 1, **caractérisé** en ce qu'un dispositif (2.5) composé d'un ou plusieurs doigts presseurs à réglage fixe, qui appuie sur une ou plusieurs spires de la fibre optique et lui imprime ainsi un modèle de micro-courbures défini, est disposé à une extrémité de l'enroulement de fibre optique (1.2).

3. Transmetteur de position selon la revendication 1 ou 2, **caractérisé** en ce que l'enroulement de fibre optique comporte n rangs et le doigt presseur (2.2) appuie sur l'une des n-spires appliquée sur un élément de réaction (2.4).

4. Transmetteur de position selon l'une ou plusieurs des revendications 1 à 3, **caractérisé** en ce que le doigt presseur (2.2) appuie sur un tronçon d'une spire de la fibre optique en plusieurs points de pression (2.3) très proches les uns des autres, dont la distance est adaptée à ladite micro-courbure résonante.

5. Transmetteur de position selon l'une ou plusieurs des revendications 1 à 4, **caractérisé** en ce que l'enroulement de fibre optique est cylindrique et que le doigt presseur se déplace coaxialement à l'axe du cylindre.

6. Transmetteur de position selon l'une ou plusieurs des revendications 1 à 4, **caractérisé** en ce que l'enroulement de fibre optique a une forme de tore et le doigt presseur se déplace selon une trajectoire concentrique.

7. Transmetteur de position selon l'une ou plusieurs des revendications 1 à 6, **caractérisé** en ce que le dispositif d'émission et de réception (6) optoélectrique est un dispositif de mesure de distance à laser dont l'erreur de mesure de distance est inférieure à la longueur de la fibre optique entre deux positions possibles du doigt presseur (2.2).

8. Transmetteur de position selon l'une ou plusieurs des revendications 1 à 7, **caractérisé** en ce que le dispositif d'émission et de réception optoélectrique est un dispositif de mesure de distance à laser à impulsions.

9. Transmetteur de position selon l'une ou plusieurs des revendications 1 à 8, **caractérisé** en ce que le dispositif d'émission et de réception optoélectrique est un dispositif de mesure de distance à laser continu travaillant selon le procédé de la mesure de phase et l'enroulement de fibre optique est enfermé dans un absorbeur de lumière.

10. Transmetteur de position selon l'une ou plusieurs des revendications 1 à 9, **caractérisé** en ce que les enroulements de fibres optiques de plusieurs transmetteurs de position sont reliés entre eux à la manière d'un branchement en série.

11. Transmetteur de position selon l'une ou plusieurs des revendications 1 à 10, **caractérisé** en ce que les enroulements de fibres optiques de plusieurs transmetteurs de position sont reliés entre eux à la manière d'un branchement en parallèle et un élément de retardement optique est monté en amont de chaque enroulement de fibre optique.

FIG. 1

EP 0 292 653 B1

FIG. 2a

FIG. 2b

FIG. 2c

2.7

4        4

FIG. 2d

2.2        2.8

2.6

2.7        1.2

IIIb

① ④ ⑦
② ⑤ ⑧
③ ⑥ ⑨

2.4

FIG. 3a

2.2

③ ⑥ ⑨

② ⑤ ⑧
① ④ ⑦

IIIb

FIG. 3b

2.2

2.4

2.5

FIG. 4

10

FIG. 5a

FIG. 5b

FIG. 6